# EUROPÄISCHE PATENTANMELDUNG

(11) **EP 2 492 766 A1**
(43) Veröffentlichungstag der Anmeldung: **29.08.2012**
(21) Anmeldenummer: 11155523.1
(22) Anmeldetag: 23.02.2011
(51) Int. Cl.: G05B 19/401

(54) **Verfahren und Einrichtung zur Steuerung der Bewegung eines Maschinenelements einer Werkzeugmaschine zum Herstellen eines Zahnrads**

(71) Anmelder: SIEMENS AKTIENGESELLSCHAFT, 80333 München (DE)
(72) Erfinder: Rosenbaum, Björn, 91056 Erlangen (DE); Smolka, Karl-Heinz, 09120 Chemnitz (DE)

(57) **Zusammenfassung**

Verfahren und Einrichtung zur Steuerung der Bewegung eines Maschinenelements einer Werkzeugmaschine zum Herstellen eines Zahnrads

Die Erfindung betrifft ein Verfahren zur Steuerung der Bewegung eines Maschinenelements (2) einer mindestens fünf Maschinenachsen aufweisenden Werkzeugmaschine (1) zum Herstellen eines Zahnrads, wobei mittels einer 3D-Kamera (8) ein Teil (9a,9b,10) der Oberfläche eines Zahnradrohlings (4) optisch erfasst wird und Bilddaten (B) erzeugt werden, wobei anhand der Bilddaten (B) die Anordnung und geometrische Form des Teils (9a,9b,10) der Oberfläche des Zahnradrohlings (4) im 3-dimensionalen Raum beschreibende Istdaten (I) ermittelt werden, wobei die Istdaten (I) mit einer Sollanordnung und einer geometrischen Sollform des Teils (9a,9b,10) der Oberfläche des Zahnradrohlings (4) im 3-dimensionalen Raum beschreibenden Solldaten (S) verglichen werden und anhand des Vergleichs Korrekturwerte (K) zur Steuerung der Bewegung des Maschinenelements (2) ermittelt werden. Weiterhin betrifft die Erfindung (16) eine diesbezügliche Einrichtung. Die Erfindung ermöglicht die Zeit, die für die Herstellung eines Zahnrads mittels einer mindestens fünf Maschinenachsen aufweisenden Werkzeugmaschine benötigt wird, zu reduzieren.

## Beschreibung

Verfahren und Einrichtung zur Steuerung der Bewegung eines Maschinenelements einer Werkzeugmaschine zum Herstellen eines Zahnrads

Die Erfindung betrifft ein Verfahren zur Steuerung der Bewegung eines Maschinenelements einer Werkzeugmaschine zum Herstellen eines Zahnrads. Weiterhin betrifft die Erfindung eine Einrichtung zur Steuerung der Bewegung eines Maschinenelements einer Werkzeugmaschine zum Herstellen eines Zahnrads.

Zur Herstellung von Zahnrädern wurden bisher sogenannte Verzahnmaschinen eingesetzt, die speziell zur Herstellung von Zahnrädern ausgebildet sind. Mit Hilfe von Verzahnmaschinen lassen sich Zahnräder schnell und in großer Menge herstellen.

Weiterhin ist es auch möglich, ein Zahnrad mit Hilfe einer mindestens fünfachsigen Werkzeugmaschine, mit der insbesondere eine Fräsbearbeitung möglich ist, aus einem Werkstück, dass z.B. in Form eines Rings ausgebildet sein kann, herauszufräsen.

Dabei wird die Form des Zahnrads an einem CAD-System konstruiert und mittels eines CAN-Systems und gegebenenfalls eines Postprozessors ein Teileprogramm zur Herstellung des Zahnrads aus dem Werkstück erzeugt. Die Werkzeugmaschine fräst dann mittels eines Fräsers entsprechend dem Teileprogramm aus dem Werkstück das Zahnrad heraus. Die Herstellung eines Zahnrads durch direktes Herausfräsen aus einem Werkstück mittels einer fünfachsigen Werkzeugmaschine dauert zwar erheblich länger als bei einer Verzahnmaschine, aber oftmals werden von einem bestimmten Zahnrad nur wenige Exemplare benötigt, so dass sich die Herstellung des Zahnrads auf einer Verzahnmaschine, die für jeden Zahnradtyp ein eigenes Werkzeug benötigt, nicht rentiert. Weiterhin können mit einer Verzahnmaschine auch nicht beliebige geometrische Formen von Zähnen des Zahnrads hergestellt werden.

Die Herstellung eines Zahnrads mittels einer Werkzeugmaschine dauert auch relativ lange, da das zu bearbeitende Werkstück nacheinander zwei Mal in eine Werkstückhaltevorrichtung zur Bearbeitung eingespannt werden muss. So wird das von der Werkzeugmaschine zu bearbeitende Werkstück zur Herstellung des Zahnrads in eine Werkstückhaltevorrichtung eingespannt und das Zahnrad aus dem Werkstück mit einem bestimmten Aufmaß versehen herausgefräst, so dass am Ende dieses Bearbeitungsschrittes ein Zahnradrohling, der bereits die prinzipielle geometrische Form des späteren Zahnrads aufweist, entsteht. Anschließend wird der Zahnradrohling aus der Werkstückhaltevorrichtung herausgenommen und in einem Ofen erhitzt und durch schnelles Abkühlen gehärtet. Zur Endbearbeitung wird der nun gehärtete Zahnradrohling wieder in die Werkstückhaltevorrichtung eingespannt und auf Endmaß gefräst. Das Aufmaß wird dabei entsprechend abgefräst.

Das Teileprogramm, das die Bewegungen der Werkzeugmaschine steuert, gibt dabei die durchzuführenden Bewegungen des Fräsers und/oder des Werkstücks bezogen auf ein Werkstückkoordinatensystem an, das vom Bediener beim Einspannen des Werkstücks in die Werkstückhaltevorrichtung festgelegt und/oder ermittelt wird. Das Teileprogamm besteht dabei im Wesentlichen aus einer Abfolge von Steuerbefehlen. Beim Einspannen des Zahnradrohlings (nach erfolgter Härtung des aus dem Werkstück herausgefrästen Zahnradrohlings) stimmt das Werkstückkoordinatensystem in der Regel nicht mehr mit dem Werkstückkoordinatensystem, das beim ersten Einspannen des Werkstücks vorhanden war, überein. So kann z.B. der Zahnradrohling und damit das Werkstückkoordinatensystem gegenüber der ursprünglichen Einspannung des Werkstücks etwas verdreht sein oder eine etwas andere Ausrichtung im Raum aufweisen.

Deshalb muss, was sehr zeitaufwändig ist, das Werkstückkoordinatensystem nach dem zweiten Einspannen in die Werkstückhaltevorrichtung durch aufwändige Vermessung neu bestimmt werden, damit der Zahnradrohling z.B. mit einem weiteren Teileprogramm, das die durchzuführenden Bewegungen des Fräsers und/oder des Werkstücks bezogen auf das Werkstückkoordinatensystem angibt, dass beim ersten Einspannung vorhanden war, auf Fertigmaß gefräst werden kann und somit ein fertiges Zahnrad, das dem im CAD-System konstruierten Zahnrad entspricht, entsteht.

Alternativ kann z.B. aber auch nur ein einzelnes Teileprogramm verwendet werden, indem das Teileprogramm nach Fertigung des Zahnradrohlings angehalten wird, anschließend der Zahnradrohling extern gehärtet wird und nach dem Einspannen des gehärteten Zahnradrohlings in die Werkstückhaltevorrichtung dasselbe Teileprogramm fortgesetzt wird.

Es ist Aufgabe der Erfindung, die Zeit, die für die Herstellung eines Zahnrads mittels einer mindestens fünf Maschinenachsen aufweisenden Werkzeugmaschine benötigt wird, zu reduzieren.

Diese Aufgabe wird gelöst durch ein Verfahren zur Steuerung der Bewegung eines Maschinenelements einer mindestens fünf Maschinenachsen aufweisenden Werkzeugmaschine zum Herstellen eines Zahnrads, wobei mittels einer 3D-Kamera ein Teil der Oberfläche eines Zahnradrohlings optisch erfasst wird und Bilddaten erzeugt werden, wobei anhand der Bilddaten die Anordnung und geometrische Form des Teils der Oberfläche des Zahnradrohlings im 3-dimensionalen Raum beschreibende Istdaten ermittelt werden, wobei die Istdaten mit einer Sollanordnung und einer geometrischen Sollform des Teils der Oberfläche des Zahnradrohlings im 3-dimensionalen Raum beschreibenden Solldaten verglichen werden und anhand des Vergleichs Korrekturwerte zur Steuerung der Bewegung des Maschinenelements ermittelt werden.

Weiterhin wird diese Aufgabe gelöst durch eine Einrichtung zur Steuerung der Bewegung eines Maschinenelements einer mindestens fünf Maschinenachsen aufweisenden Werkzeugmaschine zum Herstellen eines Zahnrads, wobei die Einrichtung eine Istdatenermittelungseinheit aufweist, die ausgebildet ist anhand von einer 3D-Kamera, die ein Teil der Oberfläche eines Zahnradrohlings optisch erfasst, erzeugter Bilddaten, die Anordnung und geometrische Form des Teils der Oberfläche des Zahnradrohlings im 3-dimensionalen Raum beschreibende Istdaten zu ermitteln, wobei die Einrichtung eine Korrekturwertermittelungseinheit aufweist, die zur Ermittelung von Korrekturwerten zur Steuerung der Bewegung des Maschinenelements anhand eines Vergleichs der Istdaten mit einer Sollanordnung und einer geometrischen Sollform des Teils der Oberfläche des Zahnradrohlings im 3-dimensionalen Raum beschreibenden Solldaten ausgebildet ist.

Vorteilhafte Ausbildungen der Erfindung ergeben sich aus den abhängigen Ansprüchen. Vorteilhafte Ausbildungen des Verfahrens ergeben sich analog zu vorteilhaften Ausbildungen der Einrichtung und umgekehrt.

Es erweist sich als vorteilhaft, wenn der Teil der Oberfläche des Zahnradrohlings in Form der Oberfläche einer Zahnnut und/oder eines Zahns des Zahnradrohlings vorliegt, da dann die geometrische Form des Teils der Oberfläche des Zahnradrohlings im 3-dimensionalen Raum beschreibende Istdaten besonders genau ermittelt werden können.

Weiterhin erweist es sich als vorteilhaft, wenn die Korrekturwerte in Form von Werten zur Korrektur eines Werstücksollkoordinatensystems auf das sich in einem Teileprogramm angebende durchzuführende Bewegungen des Maschinenelements beziehen, zu einem Werstückistkorrdinatensystem, das das aktuell an der Werkzeugmaschine vorhandene Werstückkorrdinatensystem angibt, vorliegen. Durch diese Maßnahme können auf besonders einfache Art und Weise korrekte Sollwerte für das Antriebssystem der Werkzeugmaschine erzeugt werden.

Ferner erweist sich ein Computerprogramm mit Programmcode zur Durchführung des oben genannten Verfahrens, wenn das Computerprogramm von einer Recheneinheit ausgeführt wird, als vorteilhaft. Die Recheneinheit kann z.B. in Form der erfindungsgemäßen Einrichtung zur Steuerung der Bewegung eines Maschinenelements einer mindestens fünf Maschinenachsen aufweisenden Werkzeugmaschine zum Herstellen eines Zahnrads vorliegen. Die Recheneinheit kann z.B. in Form einer CNC-Steuerung einer Werkzeugmaschine vorliegen.

Ein Ausführungsbeispiel der Erfindung ist in der Zeichnung dargestellt und wird im Folgenden näher erläutert. Dabei zeigen:
FIG 1 eine fünf Maschineachsen aufweisende Werkzeugmaschine,
FIG 2 eine Detailansicht auf einen Zahnradrohling, der in eine Werkstückhaltevorrichtung eingespannt ist und
FIG 3 eine erfindungsgemäße Einrichtung in Form einer schematisierten blockförmigen Darstellung.

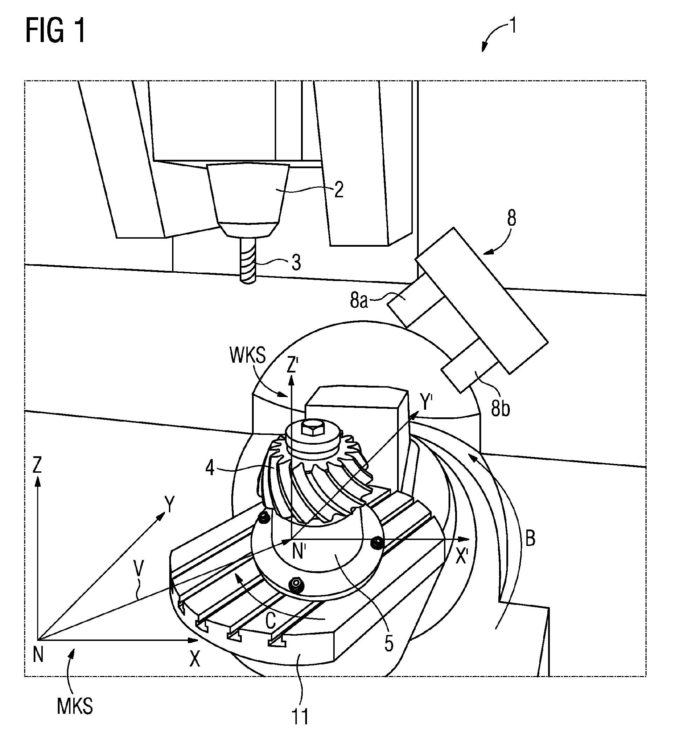

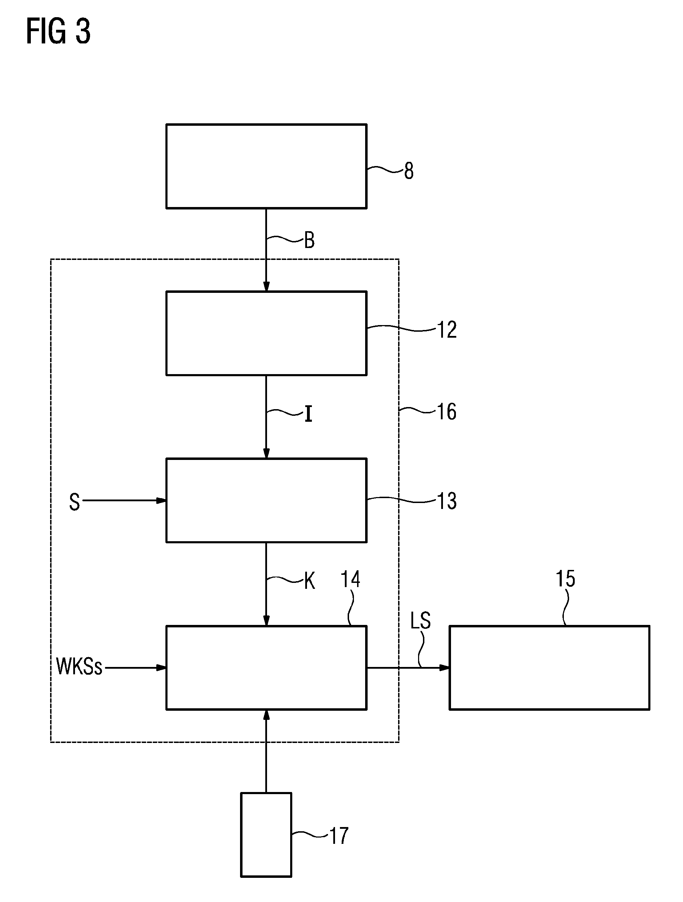

In FIG 1 ist eine Werkzeugmaschine 1 dargestellt. Die Werkzeugmaschine 1 weist ein Maschinenelement 2 auf, das im Rahmen des Ausführungsbeispiels in Form einer drehbar angeordneten Spindel ausgebildet ist. In die Spindel 2 ist ein Werkzeug 3 eingespannt, das im Rahmen des Ausführungsbeispiels in Form eines Fräsers ausgebildet ist. Die Spindel 2 treibt rotierend den Fräser an. Weiterhin weist die Werkzeugmaschine 1 einen Werkstücktisch 11 auf, auf dem eine Werkstückhaltevorrichtung 5 befestigt ist. In die Werkstückhaltevorrichtung 5 ist ein Zahnradrohling 4 eingespannt. Bei der Werkzeugmaschine 1 handelt es sich um eine sogenannte fünfachsige Werkzeugmaschine, d.h. die Werkzeugmaschine weist fünf Maschinenachsen zur Realisierung einer Relativbewegung zwischen dem Werkzeug 3 und dem Zahnradrohling 4 auf. So kann die Spindel 2 im Rahmen des Ausführungsbeispiels translatorisch in Richtung der X-Achse, Y-Achse und Z-Achse bewegt werden und der Werkzeugtisch 11 in Richtung der C-Achse und B-Achse gedreht werden, so dass die Werkzeugmaschine im Rahmen des Ausführungsbeispiels fünf Maschinenachsen aufweist. Selbstverständlich kann die Werkzeugmaschine aber auch mehr als fünf Maschinenachsen aufweisen. Die Werkzeugmaschine 1 weist ein Maschinenkoordinatensystem MKS auf, das einen Lagenullpunkt N aufweist. Das Maschinenkoordinatensystem MKS ist dabei in einer Sollwerterzeugungseinheit 14 (siehe FIG 3) abgespeichert.

Weiterhin weist die Werkzeugmaschine 1 eine 3D-Kamera 8 auf, die zwei voneinander entfernt angeordnete Objektive 8a und 8b zur Aufnahme von Bildern aus unterschiedlichen Perspektiven aufweist. Mit der 3D-Kamera 8 wird ein Teil der Oberfläche des Zahnradrohlings 4 optisch erfasst und entsprechende Bilddaten erzeugt. Die Bilddaten liegen dabei in Form von Bildern vor, die den von der 3D-Kamera 8 erfassten Teil der Oberfläche des Zahnradrohlings 4 aus zwei verschiedenen Perspektiven zeigen.

Wie schon erwähnt, erfolgt die Steuerung der Bewegung der Spindel 2 und damit des Werkzeugs 3 in Bezug zum Zahnradrohling 4 mittels eines Teileprogramms 17 (siehe FIG 3), in dem die durchzuführenden Bewegungen in Form von Steuerbefehlen festgelegt sind. Dabei können alle fünf Maschinenachsen der Werkzeugmaschine 1 gleichzeitig zur Realisierung der Relativbewegung des Werkzeugs 3 in Bezug zum Zahnradrohling 4 bewegt werden, wobei zur Realisierung einer Relativbewegung des Werkzeugs 3 in Bezug zum Zahnradrohling 4 z.B. auch nur der Zahnradrohling 4 mittels Bewegungen des Werkstücktisches 11 bewegt werden kann. Im Teileprogramm 17 sind dabei die Bewegungen der Spindel 2 und damit des Werkzeugs 3 in Bezug auf ein Werkstückkoordinatensystem WKS definiert. Das Werkstückkoordinatensystem WKS weist dabei einen Lagenullpunkt N' und Achsen X', Y' und Z' auf, wobei das Werkstückkoordinatensystem WKS eine beliebige Lage und Orientierung im Raum in Bezug auf das Maschinenkoordinatensystem MKS aufweisen kann. Der Lagenullpunkt N' des Werkstück-Koordinatensystems WKS ist im Rahmen des Ausführungsbeispiels um den Verschiebungsvektor V vom Maschinenkoordinatensystem MKS verschoben. Im Rahmen des Ausführungsbeispiels weist dabei das Werkstückkoordinatensystem WKS die gleiche Orientierung auf wie das Maschinenkoordinatensystem MKS. Innerhalb der Sollwerterzeugungseinheit 14 wird dabei zur Erzeugung von Sollwerten LS, die vorzugsweise in Form von Lagesollwerten vorliegen, zum Antrieb der Motoren zur Bewegung der Maschinenachsen die im Werkstückkoordinatensystem WKS im Teileprogramm definierten Bewegungen auf ein Maschinenkoordinatensystem MKS umgerechnet.

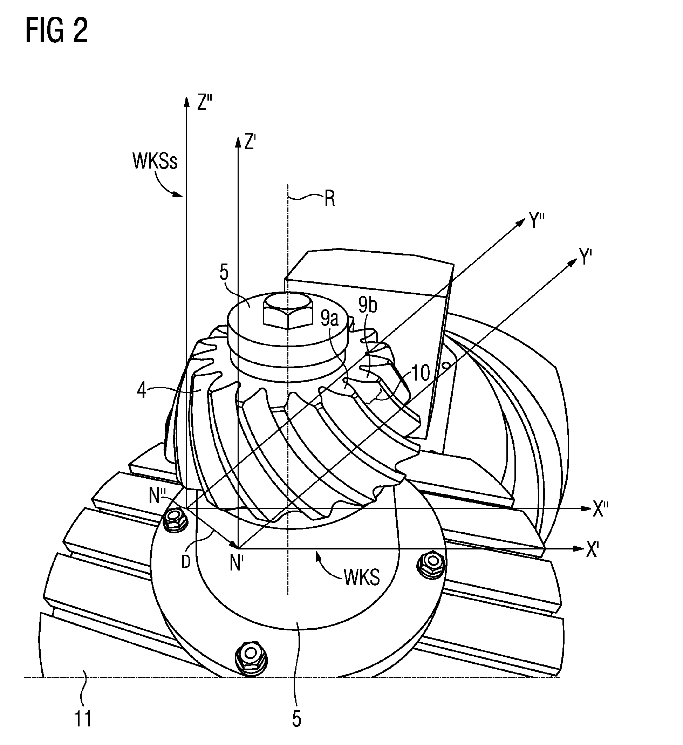

In FIG 2 sind der Zahnradrohling 4, die Werkstückhaltevorrichtung 5 sowie der Werkstücktisch 11 noch einmal vergrößert dargestellt, wobei gleiche Elemente in FIG 2 mit den gleichen Bezugszeichen versehen sind wie in FIG 1. Das Werkstückkoordinatensystem WKS wird dabei, z.B. durch Vermessen, z.B. durch einen Bediener der Werkzeugmaschine, ermittelt oder anderstweitig festgelegt. So kann z.B. die Werkstückhaltevorrichtung 5 nicht genau senkrecht zum Werkstücktisch 11 ausgerichtet sein, sondern eine geringfügig andere Ausrichtung aufweisen, so dass die Achse Z' nicht unbedingt senkrecht zum Werkstücktisch 11 stehen muss.

Zur Herstellung des Zahnrads wird ein Werkstück, das z.B. in Form eines Rings ausgebildet sein kann, in die Werkstückhaltevorrichtung eingespannt und vom Teileprogramm in Bezug auf das festgelegte Werkstückkoordinatensystem WKS, das nachfolgend als Werkstücksollkoordinatensystem WKSs bezeichnet wird, (siehe FIG 2) und die Achsen X ", Y " und Z'' sowie den Lagenullpunkt N'' aufweist, aus dem Werkstück herausgefräst und solchermaßen der Zahnradrohlich 4 gefertigt. Der Zahnradrohling 4 stimmt dabei, d.h. genau ausgedrückt seine geometrische Form, im Wesentlichen mit dem fertigen Zahnrad überein, er weist es doch noch ein bestimmtes Aufmaß von z.B. 0,2 mm zum fertigen Zahnrad auf. Nach dieser ersten Fräsbearbeitung wird das Zahnrad aus der Einspannvorrichtung 5 ausgespannt und zum Härten in einem Ofen erhitzt und anschließend rasch abgekühlt.

Anschließend wird der Zahnradrohling 4 zur Endbearbeitung wieder in die Werkstückhaltevorrichtung 5 eingespannt und somit zum zweiten Mal eingespannt. Dieser Zustand nach dem zweiten Einspannen ist in FIG 1 und FIG 2 dargestellt. Das nach dem zweiten Einspannen vorliegende aktuelle Werkstückkoordinatensystem WKS, das nachfolgend als Werkstückistkoordinatensystem WKS bezeichnet wird, weicht in der Regel, infolge der z.B. beim Einspannvorgang wirkenden Kräfte, vom Werkstücksollkoordinatensystem WKSs ab. Die Abweichung kann z.B. darin bestehen, dass wie Ausführungsbeispiel, der Lagenullpunkt N' des Werkstückistkoordinatensystems WKS vom Lagenullpunkt N" des Werkstücksollkoordinatensystem WKSs abweicht, was durch den Differenzenvektor D dargestellt ist. Das Werkstückistkoordinatensystem WKS kann jedoch z.B. auch oder zusätzlich eine vom Werkstücksollkoordinatensystem WKSs abweichende Orientierung im Raum aufweisen, so dass z.B. die Achse Z' nicht parallel zur Achse Z'' verläuft. Weiterhin kann z.B. gegenüber der ursprünglichen Einspannung der Zahnradrohling 4 um seine Rotationsachse R herum verdreht sein (in C-Richtung, siehe FIG 1), so dass sich seine Zahnnuten nicht mehr genau an der Stelle befinden, wie bei der ersten Einspannung beim Werkstücksollkoordinatensystem WKSs. Da das Teileprogramm 17 die Bewegung des Maschinenelements in Bezug auf das Werkstücksollkoordinatensystem WKSs angibt, würde ein auf das Werkstücksollkoordinatensystem WKSs bezogenes Teileprogramm, das das Fertigfräsen des Zahnradrohlings 4 auf Endmaß steuert, die Bewegung des Maschinenelements 2 fehlerhaft steuern. Um dieses zu vermeiden, müssen die neue Lage und die neue Ausrichtung des Zahnradrohlings 4 mittels aufwändiger Messungen z.B. mittels eines Messtasters, neu bestimmt werden.

Hier setzt nun die Erfindung an. In FIG 3 ist eine erfindungsgemäße Einrichtung 16 zur Steuerung der Bewegung des Maschinenelements 2 einer mindestens fünf Maschinenachsen aufweisenden Werkzeugmaschine zum Herstellen eines Zahnrads dargestellt. Die Einrichtung 16 kann z.B. in Form der CNC-Steuerung der Werkzeugmaschine 1 vorliegen.

Von der 3D-Kamera 8 wird ein Teil der Oberfläche des Zahnradrohlings 4 optisch erfasst und den erfassten Teil der Oberfläche des Zahnradrohlings beschreibende Bilddaten B erzeugt und diese an eine Istdatenermittlungseinheit 12 der Einrichtung 16 übermittelt. Der Teil der Oberfläche wird von der 3D-Kamera aus zwei unterschiedlichen Perspektiven optisch erfasst und solchermaßen 3-dimensional optisch erfasst. Der Teil der Oberfläche des Zahnradrohlings, welcher von der 3D-Kamera 8 erfasst wird, liegt dabei vorzugsweise in Form der Oberfläche einer Zahnnut 10, insbesondere in Form der Oberfläche einer einzelnen Zahnnut 10, vor (siehe FIG 2). Die Zahnnut 10 wird dabei durch die Anordnung und die geometrische Form der der Zahnnut 10 zugewandten Seitenflächen der Zähne 9a und 9b des Zahnradrohlings 4 gebildet. Da der Zahnradrohling 4 eine bezüglich seiner Rotationsachse R rotationssymmetrische Form aufweist und die Zähne und Zahnnuten rotationssymmetrisch um die Rotationsachse R des Zahnradrohlings 4 angeordnet sind, ist wenn die Anordnung und die geometrische Form im 3-dimensionalen Raum mindestens einer Zahnnut festliegen, die Anordnung und die geometrische Form des gesamten Zahnradrohlings im 3-dimensionalen Raum eindeutig bestimmt.

Die Anordnung des Teils der Oberfläche des Zahnradrohlings 4, d.h. im Rahmen des Ausführungsbeispiels die Oberfläche der Zahnnut 10, besteht dabei aus der Lage des Teils der Oberfläche des Zahnradrohlings, d.h. im Ausführungsbeispiel aus der Lage der Zahnnut 10 im 3-dimensionalen Raum und aus der Orientierung des Teils der Oberfläche des Zahnradrohlings, d.h. im Rahmen des Ausführungsbeispiels, aus der Orientierung der Zahnnut 10. Die Orientierung des Teils der Oberfläche des Zahnradrohlings, d.h. im Rahmen des Ausführungsbeispiels die Orientierung der Zahnnut 10, gibt dabei an, in welche Richtung die Zahnnut 10 im 3-dimensionalen Raum verläuft. Wenn die Orientierung der Rotationsachse R des Zahnradrohlings verändert wird, ändert sich entsprechend die Orientierung des Teils der Oberfläche des Zahnradrohlings, d.h. im Rahmen des Ausführungsbeispiels, die Orientierung der Zahnnut 10. Im Extremfall kann somit anhand der Kenntnis der Anordnung und geometrischen Form einer einzelnen Zahnnut die Anordnung und geometrische Form des gesamten Zahnradrohlings bestimmt werden. Selbstverständlich kann der Teil der Oberfläche des Zahnradrohlings aber auch in Form von mehreren Zahnnuten vorliegen, was die Genauigkeit der Bestimmung des Werkstückistkoordinatensystem WKS erhöht. Alternativ hierzu kann ein Teil der Oberfläche des Zahnradrohlings auch in Form der Oberfläche eines einzelnen Zahns oder mehrerer Zähne des Zahnradrohlings vorliegen, wobei die Oberfläche der Zähne des Zahnradrohlings durch deren jeweiligen Seitenwände gebildet wird. Weiterhin kann ein Teil der Oberfläche des Zahnradrohlings auch in Form der Oberfläche mindestens einer Zahnnut und mindestens eines Zahns vorliegen.

Von der Istdatenermittlungseinheit 12 wird anhand der Bilddaten B die Anordnung und geometrische Form des Teils der Oberfläche des Zahnradrohlings 4 im 3-dimensionalen Raum beschreibende Istdaten I ermittelt und an eine Korrekturwertermittlungseinheit 13 übermittelt. Von der Korrekturwertermittlungseinheit 13 werden die Istdaten I mit einer Sollanordnung und einer geometrischen Sollform des Teils der Oberfläche des Zahnradrohlings 4 im 3-dimensionalen Raum beschreibenden Solldaten S verglichen und anhand des Vergleichs Korrekturwerte K zur Steuerung der Bewegung des Maschinenelements 2 ermittelt. Der Vergleich wird dabei vorzugsweise durchgeführt in dem die Differenz von Solldaten S und Istdaten I ermittelt wird. Die Solldaten sind dabei in der Einrichtung 16 abgespeichert und ergeben sich aus der vom CAD-System vorgegebenen geometrischen Form des Teils der Oberfläche des Zahnradrohlings, d.h. im Rahmen des Ausführungsbeispiels aus der vorgegebenen geometrischen Form der Zahnnut 10 und dem bei der ersten Einspannung ermittelten Werkstücksollkoordinatensystem WKSs. Vorzugsweise liegen dabei die von der Korrekturwertermittlungseinheit 13 erzeugten Korrekturwerte K in Form von Werten zur Korrektur des Werkstücksollkoordinatensystems WKSs, das bei der Einspannung des Werkstücks verwendet wurde (erste Einspannung) und auf den das Teileprogramm oder die Teileprogramme zur Herstellung des Zahnrads bezogen ist, zu dem Werkstückistkoordinatensystem WKS, das das aktuell an der Werkzeugmaschine vorhandene Werkstückistkoordinatensystem WKS, d.h. das Werkstückkoordinatensystem, das sich nach dem Einspannen des Zahnradrohlings 4 ergibt (zweite Einspannung), vor.

Im Rahmen des Ausführungsbeispiels hat sich z.B., wie in FIG 2 dargestellt, beim zweiten Einspannen die Lage der Werkstückhaltevorrichtung 5 und damit die Lage des Zahnradrohlings 4 verändert, so dass sich der Lagenullpunkt N' des Werkstückistkoordinatensystems WKS gegenüber dem Lagenullpunkt N'' des Werkstücksollkoordinatensystems WKSs verschoben hat. Die Korrekturwerte K liegen im Rahmen des Ausführungsbeispiels somit in Form des Differenzenvektors D vor, der die Verschiebung des Nullpunkts N'' des Werkstücksollkoordinatensystems WKSs zum Nullpunkt N' des aktuell vorhandenen Werkstückistkoordinatensystem WKS angibt. Die Korrekturwerte K werden anschließend an eine Sollwerterzeugungseinheit 14 übermittelt, die anhand der Korrekturwerte K, den Steuerbefehlen des Teileprogramms 17, sowie dem Werkstücksollkoordinatensystem WKSs, auf den sich die Steuerbefehle des Teileprogramms 17 beziehen, Sollwerte LS zur Steuerung der Bewegung des Maschinenelements 2 für das Antriebssystems 15 der Werkzeugmaschine 1 erzeugt. Die Sollwerte LS werden dabei für jede Maschinenachse der Werkzeugmaschine von der Sollwerterzeugungseinheit 14 erzeugt. Im Rahmen des Ausführungsbeispiels handelt es sich dabei um Lagesollwerte LS, die an das Antriebssystem 15 der Werkzeugmaschine 1 als Sollwerte zur Regelung der Maschinenachsen, d.h. genau ausgedrückt zur Regelung der Antriebe der Maschinenachsen, übermittelt werden. Die Sollwerterzeugungseinheit 14 ist solchermaßen zur Ermittlung von Sollwerten LS anhand der Korrekturwerte K, dem Werkstücksollkoordinatensystem WKSs und dem Teileprogramms 17 ausgebildet.

Durch die Ermittlung von Korrekturwerten K entfällt die sonst notwendige nochmalige Bestimmung des aktuell an der Maschine vorhandenen Werkstückistkoordinatensystems WKS nach einspannen des gehärteten Zahnradrohlings, d.h. nach der zweiten Einspannung. Hierdurch wird der Zeitaufwand zur Herstellung eines Zahnrads mittels einer mindestens fünf Maschinenachsen aufweisenden Werkzeugmaschine stark reduziert. Es muss nur noch einmal nach dem Einspannen des Werkstücks, d.h. unmittelbar nach der ersten Einspannung, das Werkstücksollkoordinatensystem WKSs ermittelt werden.

## Patentansprüche

1. Verfahren zur Steuerung der Bewegung eines Maschinenelements (2) einer mindestens fünf Maschinenachsen aufweisenden Werkzeugmaschine (1) zum Herstellen eines Zahnrads, wobei mittels einer 3D-Kamera (8) ein Teil (9a,9b,10) der Oberfläche eines Zahnradrohlings (4) optisch erfasst wird und Bilddaten (B) erzeugt werden, wobei anhand der Bilddaten (B) die Anordnung und geometrische Form des Teils (9a,9b,10) der Oberfläche des Zahnradrohlings (4) im 3-dimensionalen Raum beschreibende Istdaten (I) ermittelt werden, wobei die Istdaten (I) mit einer Sollanordnung und einer geometrischen Sollform des Teils (9a,9b,10) der Oberfläche des Zahnradrohlings (4) im 3-dimensionalen Raum beschreibenden Solldaten (S) verglichen werden und anhand des Vergleichs Korrekturwerte (K) zur Steuerung der Bewegung des Maschinenelements (2) ermittelt werden.

2. Verfahren nach Anspruch 1,
**dadurch gekennzeichnet, dass** der Teil der Oberfläche des Zahnradrohlings in Form der Oberfläche einer Zahnnut (10) und/oder eines Zahns (9a,9b) des Zahnradrohlings (4) vorliegt.

3. Verfahren nach einem vorhergehenden Ansprüche,
**dadurch gekennzeichnet, dass** die Korrekturwerte (K) in Form von Werten zur Korrektur eines Werstücksollkoordinatensystems (WKSs) auf das sich in einem Teileprogramm (17) angebende durchzuführende Bewegungen des Maschinenelements (2) beziehen, zu einem Werstückistkorrdinatensystem (WKS), das das aktuell an der Werkzeugmaschine (1) vorhandene Werstückkorrdinatensystem angibt, vorliegen.

4. Computerprogramm mit Programmcode zur Durchführung eines Verfahrens nach einem der vorhergehenden Ansprüche, wenn das Computerprogramm von einer Recheneinheit ausgeführt wird.

5. Einrichtung zur Steuerung der Bewegung eines Maschinenelements (2) einer mindestens fünf Maschinenachsen aufweisenden Werkzeugmaschine (1) zum Herstellen eines Zahnrads, wobei die Einrichtung (16) eine Istdatenermittelungseinheit (12) aufweist, die ausgebildet ist anhand von einer 3D-Kamera (8), die ein Teil (9a,9b,10) der Oberfläche eines Zahnradrohlings (4) optisch erfasst, erzeugter Bilddaten (B), die Anordnung und geometrische Form des Teils (9a,9b,10) der Oberfläche des Zahnradrohlings (4) im 3-dimensionalen Raum beschreibende Istdaten (I) zu ermitteln, wobei die Einrichtung (16) eine Korrekturwertermittelungseinheit (13) aufweist, die zur Ermittelung von Korrekturwerten (K) zur Steuerung der Bewegung des Maschinenelements (2) anhand eines Vergleichs der Istdaten (I) mit einer Sollanordnung und einer geometrischen Sollform des Teils (9a,9b,10) der Oberfläche des Zahnradrohlings (4) im 3-dimensionalen Raum beschreibenden Solldaten (S) ausgebildet ist.
